# EUROPÄISCHE PATENTSCHRIFT

(11) **EP 1 054 139 B1**
(45) Veröffentlichungstag und Bekanntmachung des Hinweises auf die Patenterteilung: **31.03.2004**
(21) Anmeldenummer: 00109949.8
(22) Anmeldetag: 11.05.2000
(51) Int. Cl.: F01N 3/20

(54) **Abgasreinigungsanlage mit Stickoxidreduktion unter Reduktionsmittelzugabe**
Exhaust gas purification arrangement with NOx reduction and addition of reduction agent
Dispositif de purification de gaz d'échappement avec réduction de NOx en utilisant l'addition d'un agent réducteur

(30) Priorität: 19.05.1999 DE 19922959
(43) Veröffentlichungstag der Anmeldung: 22.11.2000
(60) Teilanmeldung: 04001061.3
(73) Patentinhaber: DaimlerChrysler AG, 70567 Stuttgart (DE); AUDI AG, 85045 Ingolstadt (DE); Bayerische Motoren Werke Aktiengesellschaft, 80809 München (DE); Volkswagen AG, 38436 Wolfsburg (DE); Dr.Ing. h.c. F. Porsche Aktiengesellschaft, 71287 Weissach (DE)
(72) Erfinder: Goerigk, Christian, 71282 Hemmingen (DE); Wessels, Stefan, 71287 Weissach-Flacht (DE)

(56) Entgegenhaltungen:
- EP-A- 0 737 802
- EP-A- 0 864 732
- DE-A- 19 510 804
- US-A- 4 404 796
- US-A- 5 628 186
- US-A- 5 665 318

## Beschreibung

Die Erfindung bezieht sich auf eine Abgasreinigungsanlage nach dem Oberbegriff des Anspruchs 1. Derartige Abgasreinigungsanlagen werden beispielsweise für Verbrennungsmotoren von Kraftfahrzeugen verwendet und ermöglichen eine Reinigung des Abgases von eventuell enthaltenen Stickoxiden nach dem sogenannten SCR(Selective Catalytic Reduction)-Verfahren. Bei diesem Verfahren werden die Stickoxide in einem entsprechenden Reduktionskatalysator chemisch unter Beteiligung eines geeigneten Reduktionsmittels reduziert, das dem Abgasstrom zugegeben wird. Als Reduktionsmittel wird häufig dampf- bzw. gasförmiger Ammoniak verwendet, der durch Verdampfung und nachfolgende Thermolyse und Hydrolyse von vorzugsweise in Lösung in den Abgasstrom eingebrachtem Harnstoff erzeugt wird.

Eine Abgasreinigungsanlage dieser Art ist in der Offenlegungsschrift WO 97/36676 offenbart. Dort wird flüssige Harnstofflösung in einer elektrisch beheizbaren Zudosiereinheit, die an einer Abgasleitungswandung angeordnet ist, unter Hydrolyse des Harnstoffs verdampft und in den Abgasstrom eingedüst. Durch einen nachgeschalteten Mischer kann die Vermischung des eingedüsten Reduktionsmittels mit dem Abgas unterstützt werden.

Bei einer in der Patentschrift EP 0 555 746 B1 offenbarten Abgasreinigungsanlage dieser Art ist ein abgasbeheizter Metallwaben-Verdampfer vorgesehen, der gleichzeitig als Hydrolysekatalysator für eingedüste Harnstofflösung und als Strömungsmischer fungiert. Dem Metallwaben-Verdampferkörper ist im Abgasstrang eine mehrteilige Katalysatoreinheit nachgeschaltet, die einen stromaufwärtigen Stickoxid-Reduktionskatalysator und einen stromabwärtigen Oxidationskatalysator umfasst.

Bei einer in der Patentschrift EP 0 615 777 B1 offenbarten Abgasreinigungsanlage wird Harnstoff in fester Partikelform in den Abgasstrom eingedüst, der anschließend einem Hydrolysekatalysator und von dort einem Stickoxid-Reduktionskatalysator und einem nachgeschalteten Oxidationskatalysator zugeführt wird.

In der Offenlegungsschrift EP 0 737 802 A2 ist eine weitere gattungsgemäße Abgasreinigungsanlage beschrieben. Als Reduktionsmittel wird dort ein Kohlenwasserstoff eingesetzt, beispielsweise derselbe, der als Brennstoff für den Verbrennungsmotor eingesetzt wird, dessen Abgasstrom zu reinigen ist. Die zugehörige Zudosiereinrichtung beinhaltet als Verdampfer einen quer in eine Abgasleitung eingeschraubten, zylindrischen Heizkörper mit halbkugelförmig gerundetem Vorderende, dem mit Abstand die Mündungsöffnung einer U-förmigen Kohlenwasserstoff-Zufuhrleitung gegenüberliegt. Umfangsseitig ist der zylindrische Heizkörper von einem zylindrischen Metallgewebekörper umgeben, der seinerseits von einem zylindrischen Schutzmantel aus gelochtem Metallmaterial umgeben ist. Im Betrieb wird flüssiger Kohlenwasserstoff über die Zufuhrleitung mit dem zylindrischen Heizkörper und dem zylindrischen Metallgewebekörper in Kontakt gebracht und dadurch verdampft. Der erzeugte Kohlenwasserstoffdampf wird durch die Öffnungen im zylindrischen Schutzmantel hindurch in den Abgasstrom geleitet.

In der Offenlegungsschrift DE 195 10 804 A1 ist eine Abgasreinigungsanlage offenbart, bei der ein gasförmiges Reduktionsmittel zur Stickoxidreduktion vor Inkontakttreten mit einem zugehörigen Katalysator in einen Hochdruckplasmazustand unter überwiegender Radikalbildung zwecks Beschleunigung der Kontaktreaktion überführt wird. Als eine der Möglichkeiten zur Erzeugung des Hochdruckplasmas ist ein zylindrischer Hohlraumresonator angegeben, in den von einem Magnetron erzeugte Mikrowellen über einen Hohlleiter eingekoppelt werden können, der parallel zur Stirnfläche des Zylinderresonators verläuft. Nach der Plasmazündung wird die Mikrowellenstrahlung in dem Hohlleiter direkt in das Plasmagas eingekoppelt. Das Reduktionsmittel wird mit Abstand stromaufwärts von der Plasmazone in bereits gasförmigem Zustand über eine Düse in eine zugehörige Abgasleitung eingeleitet.

Der Erfindung liegt als technisches Problem die Bereitstellung einer Abgasreinigungsanlage der eingangs genannten Art zugrunde, bei der das Reduktionsmittel zur Stickoxidreduktion mit relativ geringem Aufwand in vorteilhafter Weise als Dampf dem Abgasstrom zugegeben werden kann.

Die Erfindung löst dieses Problem durch die Bereitstellung einer Abgasreinigungsanlage mit den Merkmalen des Anspruchs 1. Bei dieser Anlage beinhaltet der im Abgasstrang stromaufwärts des Stickoxid-Reduktionskatalysators angeordnete Verdampfer als Wärmequelle eine beheizbare plattenförmige Prallfläche, die parallel zur Abgasströmungsrichtung orientiert ist und daher die Abgasströmung nicht merklich stört, so dass kein signifikanter Abgasdruckabfall über den Verdampfer hinweg auftritt, und auf die das von einer Zufuhreinheit zugeführte Reduktionsmittel unter Druck gerichtet wird. Es zeigt sich, dass damit einerseits eine ausreichende Reduktionsmittelverdampfung erzielbar ist und andererseits der Aufwand für die Bereitstellung des Verdampfers relativ gering bleibt.

Bei einer nach Anspruch 2 weitergebildeten Abgasreinigungsanlage ist als Wärmequelle des Verdampfers eine Prallplatte vorgesehen, die flächig an der Innenseite eines Abgasrohres oder aber im Inneren desselben positioniert ist. Die Beheizung kann in einer je nach Anwendungsfall geeigneten, herkömmlichen Weise erfolgen, z.B. durch eine zugeordnete elektrische Heizeinheit.

Bei einer nach Anspruch 3 weitergebildeten Abgasreinigungsanlage ist als Wärmequelle des Verdampfers eine beheizbare Prallplatte vorgesehen, die sich in einem Teilstrom-Leitungszweig des Abgasstrangs befindet, wobei dieser Leitungszweig von einem Hauptstrom-Abgasstrangabschnitt abzweigt und stromabwärts von der Abzweigstelle wieder in diesen einmündet.

Eine nach Anspruch 4 weitergebildete Abgasreinigungsanlage beinhaltet wenigstens zwei hintereinandergeschaltete Katalysatorstufen mit unterschiedlichem Ammoniak-Speicherverhalten, von denen wenigstens eine den Stickoxid-Reduktionskatalysator bildet. Es zeigt sich, dass diese Maßnahme in bestimmten Fällen zur Erzielung einer möglichst vollständigen Stickoxidreduktion von Vorteil ist, wobei je nach Einsatzfall die stromaufwärtige Stufe ein höheres oder niedrigeres Ammoniak-Speichervermögen als die stromabwärtige Stufe haben kann.

Vorteilhafte Ausführungsbeispiele der Erfindung sind in den Zeichnungen dargestellt und werden nachfolgend beschrieben. Hierbei zeigen:
- Fig.1: ein schematisches Blockdiagramm eines Verbrennungsmotors mit zugehöriger Abgasreinigungsanlage mit im Abgashauptstrom liegendem Prallplatten-Verdampfer und
- Fig.2: eine Darstellung entsprechend Fig. 1, jedoch für eine Abgasanlage mit in einem Teilstrom-Leitungszweig angeordnetem Prallplatten-Verdampfer.

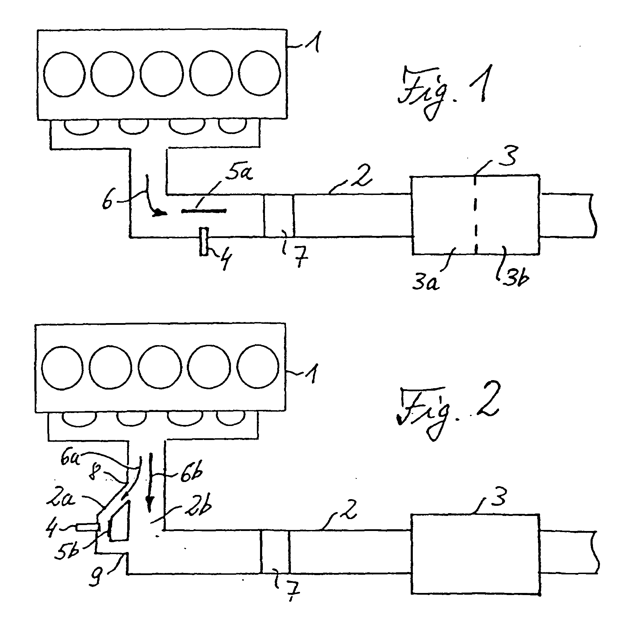

Fig. 1 zeigt schematisch einen z.B. in einem Kraftfahrzeug verwendeten Verbrennungsmotor 1 mit einer zugehörigen Abgasreinigungsanlage zur Reinigung des Motorabgases insbesondere von darin eventuell enthaltenen Stickoxiden. Letztere treten insbesondere bei mager betriebenen Verbrennungsmotoren auf.

Für die Reinigung des Abgases von Stickoxiden beinhaltet die Abgasreinigungsanlage einen im Abgasstrang 2 des Verbrennungsmotors 1 positionierten Stickoxid-Reduktionskatalysator 3. Dieser kann ein- oder mehrstufig ausgelegt sein, wobei in Fig. 1 beispielhaft eine zweistufige Auslegung mit einer stromaufwärtigen Stufe 3a und einer stromabwärtigen Stufe 3b gezeigt ist. Die beiden Katalysatorstufen 3a, 3b unterscheiden sich vorzugsweise in ihrem Ammoniak-Speichervermögen, wobei je nach Bedarf die stromaufwärtige Katalysatorstufe 3a ein niedrigeres oder höheres Ammoniak-Speichervermögen hat als die stromabwärtige Katalysatorstufe 3b.

Des weiteren beinhaltet die Abgasreinigungsanlage stromaufwärts des Stickoxid-Reduktionskatalysators 3 im Abgasstrang 2 eine Reduktionsmittel-Zudosiereinrichtung, die eine Zufuhreinheit 4 und einen Prallplatten-Verdampfer aufweist, der aus einer beheizbaren Prallplatte 5a besteht, die in einer üblichen und daher nicht näher gezeigten Weise z.B. elektrisch beheizt wird. Über die Zufuhreinheit 4 wird ein Reduktionsmittel oder ein Vorprodukt desselben, z.B. fester oder flüssiger Harnstoff, von außen in den einteiligen Abgasstrang 2 eingedüst, in welchem der von den einzelnen Motorzylindern kommende, zusammengefasste Abgasstrom 6 geführt ist.

Die verdampfende Prallplatte 5a befindet sich im Inneren des von einem entsprechenden Abgasrohr gebildeten, einteiligen Abgasstrangs 2 mit Abstand zur Rohrwandung und ist parallel zur Längsachse des Abgasrohrabschnitts orientiert. Dementsprechend liegt sie mit ihrer Plattenebene auch parallel zur Hauptströmungsrichtung des sie umströmenden Abgasstroms 6, so dass sie den Abgasrohr-Strömungsquerschnitt nur minimal mit ihrer Schmalseite beeinflusst.

Mit Abstand liegt der Aufprallseite der Prallplatte 5a die als Eindüseinheit bzw. Einspritzdüse ausgeführte Reduktionsmittel-Zufuhreinheit 4 gegenüber, die in eine zugehörige Öffnung der Abgasrohrleitung eingebracht ist. Über die Eindüseinheit 4 wird das Reduktionsmittel bzw. das Reduktionsmittel-Vorprodukt, wie gelöster Harnstoff, unter Druck auf die zugewandte Seite der beheizten Prallplatte 5a aufgespritzt oder aufgesprüht und dadurch in den Abgasstrom 6 verdampft.

Im Abgasstrangabschnitt zwischen Verdampfer 5a und Stickoxid-Reduktionskatalysator 3 ist ein Gasmischer 7 üblicher Bauart vorgesehen. Dieser sorgt für eine ausreichende, homogene Vermischung des im Verdampfer 5 verdampften Reduktionsmittels bzw. Reduktionsmittel-Vorprodukts mit dem zu reinigenden Abgas. Zudem kann der Gasmischer 7 bei Bedarf so ausgelegt sein, dass er zusätzlich als Harnstoff-Hydrolysekatalysator fungiert und/oder eine stickoxidreduzierende Funktion ausübt. Das heißt, der Gasmischer 7 kann bei Bedarf ein in Dampfform dem Abgas zudosiertes Reduktionsmittel-Vorprodukt in das gewünschte Reduktionsmittel umwandeln, z.B. Harnstoffdampf durch Hydrolyse in gasförmigen Ammoniak. Bei Bedarf kann zudem die Prallplatte 5a mit einer katalytisch wirksamen Beschichtung versehen sein, z.B. mit einem Hydrolysekatalysatormaterial zur Umwandlung von Harnstoff in Ammoniak. Im anschließenden Stickoxid-Reduktionskatalysator 3 erfolgt dann unter Beteiligung des dampfförmigen Reduktionsmittels die vollständige selektive chemische Reduktion der im Abgas enthaltenen Stickoxide zu Stickstoff.

Je nach Bedarf kann zudem vorgesehen sein, dass weitere Katalysatoren mit abgasreinigender Funktion, wie ein Oxidationskatalysator oder ein Dreiwege-Katalysator, seriell vor oder hinter dem Stickoxid-Reduktionskatalysator 3 angeordnet sind, sei es als eigene Katalysatorkörper oder integriert mit dem Stickoxid-Reduktionskatalysator 3 in einer gemeinsamen Katalysatorbaueinheit.

Fig. 2 zeigt eine Variante der Abgasreinigungsanlage von Fig. 1, bei welcher statt des im Abgashauptstrom angeordneten Prallplatten-Verdampfers 5a der Anlage von Fig. 2 ein wiederum als beheizbare Prallplatte 5b realisierter Verdampfer in einem Teilstrom-Leitungszweig 2a des Abgasstrangs 2 angeordnet ist. Der Teilstrom-Leitungszweig 2a zweigt an einer Ausmündungsstelle 8 vom Hauptstrom-Abgasstrangabschnitt 2b des Abgasstrangs 2 ab und mündet an einer stromabwärtigen Einmündungsstelle 9 wieder in den Hauptstrom-Abgasstrangabschnitt 2b ein. Dementsprechend teilt sich der Abgasstrom in diesem Bereich in einen im Hauptstrom-Abgasstrangabschnitt 2b verbleibenden Abgashauptstrom 6b größerer Abgasmenge und einen durch den Teilstrom-Leitungszweig 2a strömenden Abgasteilstrom 6a kleinerer Abgasmenge auf.

Im Teilstrom-Leitungszweig 2a ist die beheizbare Prallplatte 5b an einer Wandung des zugehörigen Leitungsrohres angeordnet, während in einer Öffnung im gegenüberliegenden Rohrwandbereich die als Einspritzdüse ausgelegte Reduktionsmittel-Zufuhreinheit 4 fixiert ist. Die Einspritzdüse 4 liegt der beheizbaren Prallplatte 5b auf diese Weise mit Abstand gegenüber und spritzt oder sprüht im Betrieb das ihr zugeführte Reduktionsmittel oder Reduktionsmittel-Vorprodukt unter Druck auf die zugewandte, heiße Seite der Prallplatte 5b auf. Das Reduktionsmittel bzw. Reduktionsmittel-Vorprodukt wird dadurch verdampft und vom Abgasteilstrom 6a mitgerissen, mit dem es dann mit dem Abgashauptstrom 6b zusammengeführt wird, der den Prallplatten-Verdampfer 5b umgeht. Im anschließenden Gasmischer 7 wird das verdampfte Reduktionsmittel bzw. Reduktionsmittel-Vorprodukt homogen über den gesamten Abgasrohrquerschnitt mit dem Abgas vermischt und dabei, falls es sich um ein Reduktionsmittel-Vorprodukt handelt, gleichzeitig in das gewünschte Reduktionsmittel umgewandelt, das dann im anschließenden Stickoxid-Reduktionsmittelkatalysator 3 zur Stickoxidreduktion zur Verfügung steht. Im übrigen ergeben sich auch für die Anlage von Fig. 2 wiederum dieselben Eigenschaften, Vorteile und Variationsmöglichkeiten, wie sie oben zu der Anlage der Fig. 1 angegeben sind.

## Patentansprüche

1. Abgasreinigungsanlage zur Reinigung eines in einem Abgasstrang (2) geführten Abgasstroms (6), insbesondere für einen Kraftfahrzeug-Verbrennungsmotor, mit
- einem im Abgasstrang angeordneten Stickoxid-Reduktionskatalysator (3) zur Reduktion von im Abgas enthaltenen Stickoxiden unter Beteiligung eines in den Abgasstrang eingebrachten, dampfförmigen Reduktionsmittels und
- einer Reduktionsmittel-Zudosiereinrichtung (4, 5) zur Zudosierung des Reduktionsmittels oder eines Reduktionsmittel-Vorprodukts zum Abgasstrom, die eine Zufuhreinheit (4) und einen im Abgasstrang stromaufwärts des Stickoxid-Reduktionskatalysators angeordneten Verdampfer (5, 5a, 5b) umfasst,
**dadurch gekennzeichnet, dass**
- der Verdampfer (5, 5a, 5b) als Wärmequelle eine beheizbare plattenförmige Prallfläche (5a, 5b) aufweist, die parallel zur Abgasströmungsrichtung orientiert ist und auf die das von der Zufuhreinheit (4) zugeführte Reduktionsmittel unter Druck gerichtet wird.

2. Abgasreinigungsanlage nach Anspruch 1, weiter
**dadurch gekennzeichnet, daß**
die beheizbare Prallfläche flächig an der Innenseite einer Rohrleitung (2a) des Abgasstrangs (2) anliegt oder sich im Inneren der Rohrleitung befindet.

3. Abgasreinigungsanlage nach Anspruch 2, weiter
**dadurch gekennzeichnet, daß**
die beheizbare Prallplatte (5b) in einem Teilstrom-Leitungszweig (2a) des Abgasstrangs (2) angeordnet ist, der von einem Hauptstrom-Abgasstrangabschnitt (2b) abzweigt und stromabwärts der Abzweigstelle (8) wieder in diesen einmündet.

4. Abgasreinigungsanlage nach einem der Ansprüche 1 bis 3, weiter
**dadurch gekennzeichnet, daß**
sie zwei seriell hintereinandergeschaltete Katalysatorstufen (3a, 3b) mit unterschiedlichem Reduktionsmittel-Speichervermögen beinhaltet, von denen wenigstens eine den Stickoxid-Reduktionskatalysator bildet.

## Claims

1. Exhaust gas purification system for purifying an exhaust gas stream (6) guided in a exhaust gas pipe run (2), in particular for a motor vehicle internal-combustion engine, comprising
- a nitrogen oxide reduction catalyst (3) arranged in the exhaust gas pipe run for reducing nitrogen oxides contained in the exhaust gas with the involvement of a vapour-like reducing agent introduced into the exhaust gas pipe run and
- a reducing agent feed device (4, 5) for feeding the reducing agent or a reducing agent pre-product to the exhaust gas stream which comprises a feed unit (4) and an evaporator (5, 5a, 5b) arranged in the exhaust gas pipe run upstream from the nitrogen oxide reduction catalyst,
**characterised in that**
- the evaporator (5, 5a, 5b) has, as a heat source, a heatable plate-shaped impact face (5a, 5b) which is oriented parallel to the exhaust gas flow direction and towards which the reducing agent fed by the feed unit (4) is directed under pressure.

2. Exhaust gas purification system according to claim 1, further **characterised in that** the heatable impact face rests in a planar manner on the inside of a pipe line (2a) of the exhaust gas pipe run (2) or is located inside the pipe line.

3. Exhaust gas purification system according to claim 2, further **characterised in that** the heatable impact plate (5b) is arranged in a partial stream line branch (2a) of the exhaust gas pipe run (2) which branches off from a main stream of an exhaust gas pipe run section (2b) and opens into it again downstream from the branching point (8).

4. Exhaust gas purification system according to any one of claims 1 to 3, further **characterised in that** it contains two catalyst stages (3a, 3b) connected in series one behind the other, with different reducing agent storage capacity, of which at least one contains the nitrogen oxide reducing catalyst.

## Revendications

1. Installation d'épuration de gaz d'échappement pour épurer un écoulement de gaz d'échappement (6) guidé et conduit dans une ligne de gaz d'échappement (2), notamment pour un moteur à combustion interne de véhicule automobile, comprenant :
- un pot catalytique (3) de réduction des oxydes d'azote, disposé dans la ligne de gaz d'échappement et destiné à la réduction d'oxydes d'azote contenus dans les gaz d'échappement, avec la participation d'un agent réducteur sous forme de vapeur ayant été introduit dans la ligne de gaz d'échappement, et
- un dispositif d'addition dosée d'agent réducteur (4, 5) pour l'addition dosée, à l'écoulement de gaz d'échappement, de l'agent réducteur ou d'un produit primaire d'agent réducteur, qui englobe une unité d'amenée (4) et un évaporateur (5, 5a, 5b) disposé dans la ligne de gaz d'échappement, en amont du pot catalytique de réduction des oxydes d'azote,
**caractérisée en ce que**
- l'évaporateur (5, 5a, 5b) comprend en guise de source de chaleur, une surface d'impact (5a, 5b) en forme de plaque pouvant être chauffée, qui est orientée parallèlement à la direction d'écoulement des gaz d'échappement et sur laquelle est dirigé sous pression l'agent réducteur amené par l'unité d'amenée (4).

2. Installation d'épuration de gaz d'échappement selon la revendication 1, **caractérisée en outre en ce que** la surface d'impact pouvant être chauffée s'appuie de manière surfacique sur le côté intérieur d'une conduite tubulaire (2a) de la ligne de gaz d'échappement (2), ou se trouve à l'intérieur de la conduite tubulaire.

3. Installation d'épuration de gaz d'échappement selon la revendication 2, **caractérisée en outre en ce que** la plaque d'impact (5b) pouvant être chauffée est disposée dans une conduite de dérivation d'écoulement partiel (2a) de la ligne de gaz d'échappement (2), qui est dérivée d'un tronçon de ligne de gaz d'échappement d'écoulement principal (2b) et débouche à nouveau dans celui-ci en aval de la zone de dérivation (8).

4. Installation d'épuration de gaz d'échappement selon l'une des revendications 1 à 3, **caractérisée en outre en ce qu'**elle comprend deux étages de pot catalytique (3a, 3b) se succédant en série et ayant une capacité d'accumulation d'agent réducteur différente, dont l'un au moins constitue un pot catalytique de réduction des oxydes d'azote.
